# EUROPEAN PATENT APPLICATION

(11) **EP 4 318 791 A1**
(43) Date of publication of application: **07.02.2024**
(21) Application number: 22792017.0
(22) Date of filing: 20.04.2022
(51) Int. Cl.: H01M 50/581, H01M 50/129, H01M 50/119, H01M 50/178

(54) **BATTERY INCLUDING SHORT CIRCUIT STRUCTURE ACCORDING TO TEMPERATURE CHANGE AND ELECTRONIC DEVICE COMPRISING SAME**

(30) Priority: 21.04.2021 KR 20210051888
(71) Applicant: Samsung Electronics Co., Ltd., Suwon-si, Gyeonggi-do 16677 (KR)
(72) Inventor: LEE, Seongil, Suwon-si Gyeonggi-do 16677 (KR); JEON, Yongsub, Suwon-si Gyeonggi-do 16677 (KR); KIM, Gusup, Suwon-si Gyeonggi-do 16677 (KR); SEO, Youngho, Suwon-si Gyeonggi-do 16677 (KR)
(74) Representative: Gulde & Partner
(86) International application number: PCT/KR2022/005639
(87) International publication number: WO 2022/225317

(57) **Abstract**

According to an embodiment of the present invention, disclosed are a battery and an electronic device comprising same, the battery comprising: an electrode assembly including a first electrode tab and a second electrode tab; an exterior material including an internal space for accommodating at least a portion of the electrode assembly; a first critical temperature resistor (CTR) disposed in one region of the first electrode tab overlapping the edge of the exterior material in one direction while the at least a portion of the electrode assembly is accommodated in the internal space of the exterior material; and a second CTR disposed in one region of the second electrode tab overlapping the edge of the exterior material in one direction, wherein at least one of the first electrode tab and the second electrode tab is electrically connected to an external component while the at least a portion of the electrode assembly is accommodated in the internal space of the exterior material, so as to form a first conductive path between the electrode assembly and the external component, and the first CTR and the second CTR are electrically connected to a metal layer included in the exterior material while the at least a portion of the electrode assembly is accommodated in the internal space of the exterior material, so as to form a second conductive path between the electrode assembly and the exterior material.

## Description

### [Technical Field]

Various embodiments disclosed herein relate to a battery including a structure that is short-circuited depending on a temperature change and an electronic device including the battery.

### [Background Art]

An electronic device provides various functions based on so-called digital convergence, in which various information and communication technologies are converged. Correspondingly, efficient management of power, which is a pivotal basis for functional operation of the electronic device, has attracted attention, and as part of this, technologies for improving the safety of a battery supplying the power have been proposed.

### [Disclosure of Invention]

### [Technical Problem]

Due to the characteristics of batteries that are sensitive to temperature, when a battery in a high-voltage or a fully-charged state is exposed to a high-temperature environment, a thermal runaway phenomenon due to heat generation of the battery may be induced, which may lead to safety problems such as ignition or explosion of the battery. In order to control this abnormal phenomenon of the battery, a technique for promoting stabilization by reducing battery voltage by short-circuiting the battery current when the temperature of the battery rises has been proposed. However, since this technique requires a semiconductor device-based control circuit, in which the electrical resistance varies depending on temperature, to be implemented outside the battery, the internal space of the electronic device to which the battery is applied may be limited.

Various embodiments disclosed herein provide a battery including a structure that is short-circuited depending on a temperature change to be capable of implementing a short-circuit mechanism for battery current in a high-temperature environment based on a semiconductor device disposed inside the battery, and an electronic device including the battery.

### [Solution to Problem]

A battery according to an embodiment may include an electrode assembly including a first electrode tab and a second electrode tab, an exterior material including an internal space configured to accommodate at least a portion of the electrode assembly, and a first critical temperature resistor (CTR) disposed in an area of the first electrode tab and a second CTR disposed in an area of the second electrode tab, wherein the first CTR and the second CTR overlap an edge of the exterior material in one direction in a state in which at least a portion of the electrode assembly is accommodated in the internal space of the exterior material.

According to an embodiment, in the state in which the at least a portion of the electrode assembly is accommodated in the internal space of the exterior material, at least one of the first electrode tab and the second electrode tab may be electrically connected to an external component to provide a first conductive path between the electrode assembly and the external component.

According to an embodiment, in the state in which the at least a portion of the electrode assembly is accommodated in the internal space of the exterior material, the first CTR and the second CTR may be electrically connected to a metal layer included in the exterior material to provide a second conductive path between the electrode assembly and the exterior material.

An electronic device according to an embodiment may include a housing including a first surface, a second surface, and a third surface surrounding the space between the first surface and the second surface, and a battery disposed inside the housing.

### [Advantageous Effects of Invention]

According to various embodiments, it is possible to provide a battery mechanism capable of preventing in advance a safety accident, such as ignition or explosion of a battery in a high-temperature environment.

In addition, various effects directly or indirectly identified through the disclosure may be provided.

### [Brief Description of Drawings]

FIG. 1 is a view illustrating an electrode assembly according to an embodiment.
FIG. 2 is a view illustrating an electrode assembly according to another embodiment.
FIG. 3 is a view illustrating an exterior material according to an embodiment.
FIG. 4 is a view illustrating an electrode assembly accommodated in an exterior material according to an embodiment.
FIG. 5 is a view illustrating a battery according to an embodiment.
FIG. 6 is a view illustrating the inside of a battery according to an embodiment viewed from one direction.
FIG. 7 is a view illustrating a cross section of one area of the battery according to an embodiment viewed from another direction.
FIG. 8 is a view illustrating the inside of a battery according to another embodiment viewed from one direction.
FIG. 9 is a view illustrating a cross section of one area of the battery according to another embodiment viewed from another direction.
FIG. 10 is a view illustrating various shapes of a critical temperature resistor (CTR) according to an embodiment.
FIG. 11 is a view illustrating an electrode assembly accommodated in an exterior material according to another embodiment.
FIG. 12 is a view illustrating a cross section of one area of the battery according to another embodiment viewed from one direction.
FIG. 13 is a view illustrating the front surface of an electronic device according to an embodiment.
FIG. 14 is a view illustrating the rear surface of the electronic device according to an embodiment.
FIG. 15 is a view illustrating an electronic device according to an embodiment in an exploded state.

In relation to the description of drawings, the same reference numbers may be assigned to the same or corresponding components.

### [Mode for Carrying out the Invention]

Hereinafter, various embodiments of the present disclosure are disclosed with reference to the accompanying drawings. However, the present disclosure is not intended to be limited by the various embodiments of the present disclosure to a specific embodiment and it is intended that the present disclosure covers all modifications, equivalents, and/or alternatives of the present disclosure provided they come within the scope of the appended claims and their equivalents.

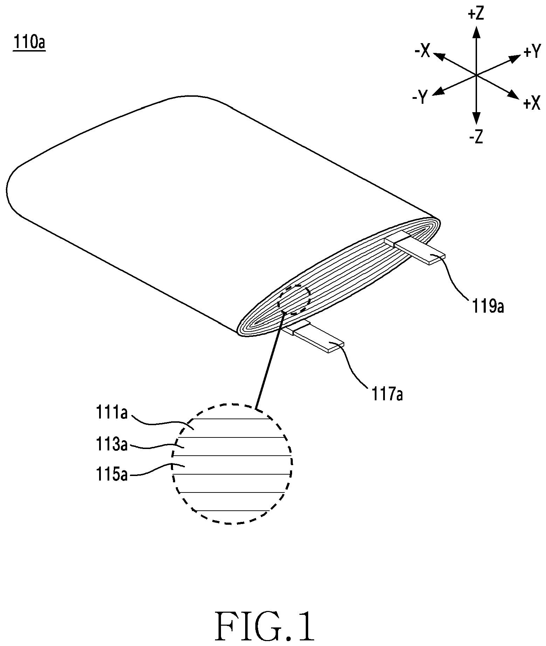

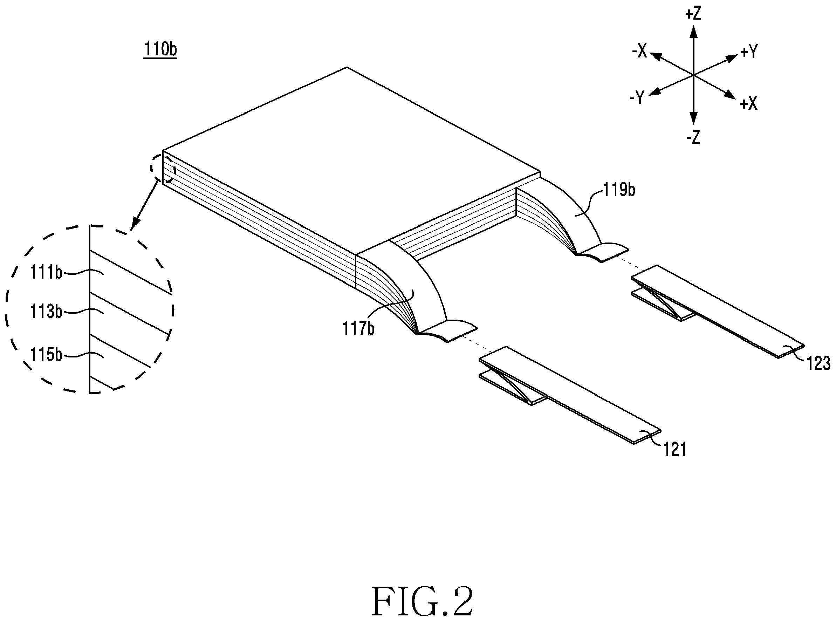

FIG. 1 is a view illustrating an electrode assembly 110a according to an embodiment, and FIG. 2 is a view illustrating an electrode assembly 110b according to another embodiment.

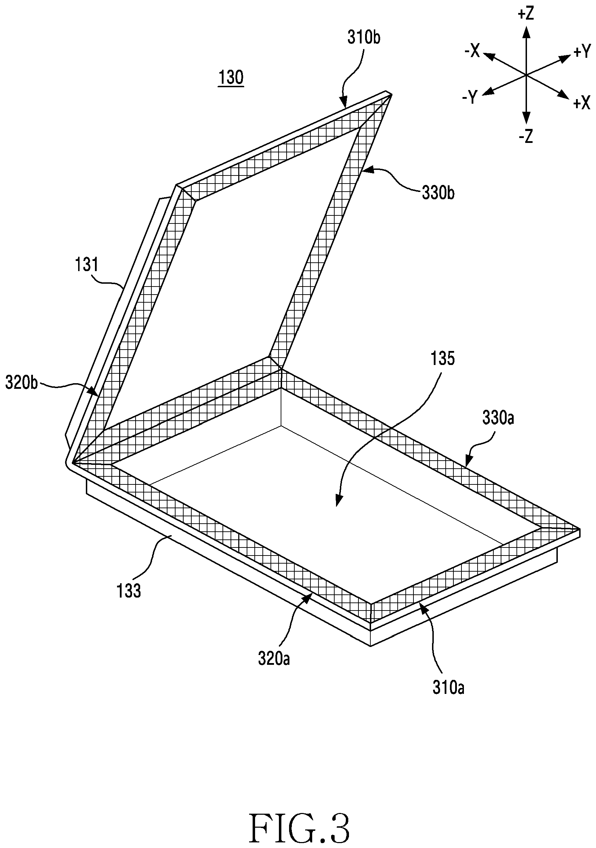

Referring to FIG. 1, the electrode assembly 110a according to an embodiment may include a jelly roll-type structure. For example, the electrode assembly 110a includes a positive electrode 111a, which is fabricated by coating a positive electrode active material on one or both surfaces of a positive electrode current collector (e.g., coating and drying a slurry containing an active material), and a negative electrode 115a, which is fabricated by coating a negative electrode active material on one or both surfaces of a negative electrode current collector, wherein a separator 113a made of an insulating material may be interposed between the positive electrode 111a and the negative electrode 115a, and then the positive and negative electrodes 111a and 115a and the separator 113a may be wound spirally to have a predetermined shape (e.g., a shape corresponding to the exterior material 130 to be described later with reference to FIG. 3).

In an embodiment, the jelly roll-type electrode assembly 110a may include a first electrode tab 117a (e.g., a positive electrode tab) and a second electrode tab 119a (e.g., a negative electrode tab). For example, a first electrode tab 117a, which supports electrical connection with an external component (e.g., another battery or an electronic component), may be coupled (e.g., welded) to an area of an end portion of the positive collector of the positive electrode 111a, the end portion facing a first direction (e.g., the +X direction). Similarly, a second electrode tab 119a, which supports electrical connection with an external component, may be coupled to an area of an end portion of the negative collector of the negative electrode 115a, the end portion facing the first direction (e.g., the +X direction).

Referring to FIG. 2, the electrode assembly 110b according to another embodiment may include a stack-type structure. For example, in the electrode assembly 110b, a plurality of positive electrodes 111b, which are fabricated by coating one surface or both surfaces of each of positive electrode current collectors with a positive electrode active material, and a plurality of negative electrodes 115b, which are fabricated by coating one or both surfaces of each of negative electrode current collectors with a negative electrode active material, may be alternately stacked, and a separator 113b made of an insulating material may be interposed between each of the plurality of positive electrodes 111b and each of the plurality of negative electrodes 115b.

In an embodiment, the stack-type electrode assembly 110b may include a first electrode tab 117b (e.g., a positive electrode tab) and a second electrode tab 119b (e.g., a negative electrode tab). For example, a first electrode tab 117b may be coupled (e.g., welded) to an area of an end portion of each of the positive electrode current collectors of the plurality of positive electrodes 111b, the end portion facing the first direction (e.g., the +X direction), and a first electrode tab 117b corresponding to one positive electrode current collector may be coupled (e.g., welded) to a first electrode tab 117b corresponding to at least one other positive electrode current collector such that one or more areas thereof are coupled to each other in the form of a bundle. Similarly, a second electrode tab 119b may be coupled to an area of an end portion of each of the negative electrode current collectors of the plurality of negative electrodes 115b, the end portion facing the first direction (e.g., the +X direction), and a second electrode tab 119b corresponding to one positive electrode current collector may be coupled to a second electrode tab 119b corresponding to at least one other negative electrode current collector such that one or more areas thereof are coupled to each other in the form of a bundle.

In an embodiment, the stack-type electrode assembly 110b may further include a first electrode lead 121 (e.g., a positive electrode lead) and a second electrode lead 123 (e.g., a negative electrode lead). For example, the stack-type electrode assembly 110b may include a first electrode lead 121 coupled (e.g., welded) to the one area of the first electrode tab 117b coupled in the form of the bundle to support electrical connection to an external component (e.g., another battery or an electronic component), and a second electrode lead 123 coupled to the one area of the second electrode tab 119b coupled in the form of the bundle to support electrical connection to an external component.

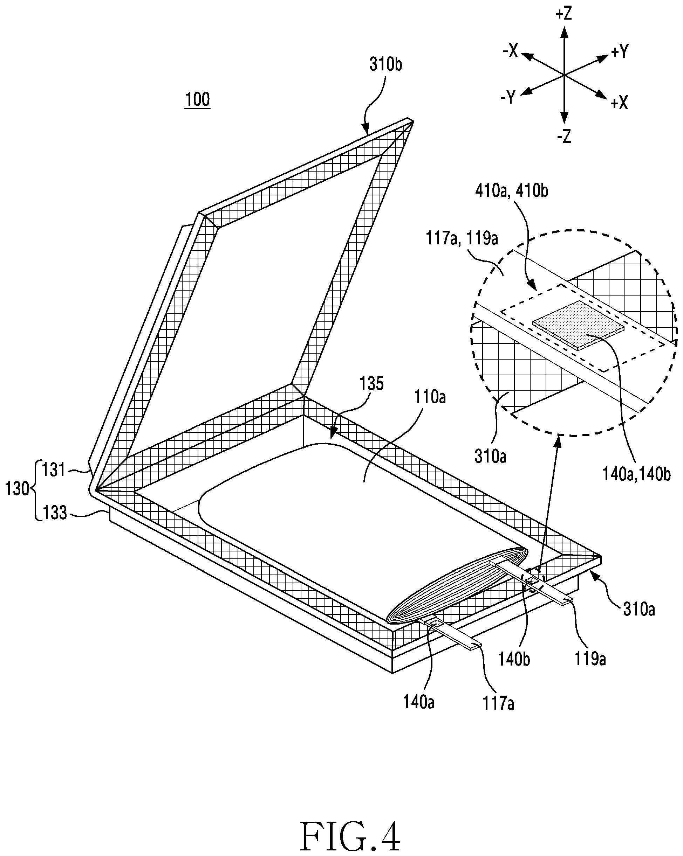

FIG. 3 is a view illustrating the exterior material 130 according to an embodiment, and FIG. 4 is a view illustrating the electrode assembly 110a accommodated in the exterior material 130 according to an embodiment.

Referring to FIGS. 3 and 4, the battery 100 according to an embodiment may include an electrode assembly 110a (e.g., a jelly roll-type electrode assembly) including a first electrode tab 117a and a second electrode tab 119a, an exterior material 130 configured to accommodate at least a portion of the electrode assembly 110a, and a plurality of critical temperature resistors (CTRs) 140a and 140b, which are disposed in one areas of the first electrode tab 117a and the second electrode tab 119a, respectively. According to various embodiments, at least one of the above-mentioned components may be omitted from the battery 100 or other components may be additionally included in the battery. For example, the battery 100 may further include an electrolyte solution introduced into the exterior material 130 such that at least a portion of the electrode assembly 110a accommodated in the exterior material 130 is impregnated with the electrolyte solution.

In various embodiments, the jelly roll-type electrode assembly 110a may be replaced with the above-mentioned stack-type electrode assembly (e.g., the stack-type electrode assembly 110b in FIG. 2). In this case, the embodiments to be described later regarding the first electrode tab 117a and the second electrode tab 119a of the jelly roll-type electrode assembly 110a may be equally or similarly applied to the first electrode lead (e.g., the first electrode lead 121 in FIG. 2) and the second electrode lead (e.g., the second electrode lead 123 in FIG. 2) included in the stack-type electrode assembly 110b.

In an embodiment, the exterior material 130 may include an upper exterior material 131 and a lower exterior material 133, and the upper exterior material 131 and the lower exterior material 133 may be at least partially sealed to each other at respective edge areas thereof to form the exterior material 130. According to an embodiment, the upper exterior material 131 and the lower exterior material 133 may be provided in a form in which the edge areas facing a second direction (e.g., the -X direction) opposite to the first direction (e.g., the +X direction) are coupled to each other. In this case, the lower exterior material 133 may include a the first sealing area 310a facing the first direction (e.g., the +X direction), a second sealing area 320a facing a third direction (e.g., the -Y direction) perpendicular to the first direction (e.g., +X direction) or the second direction (e.g., the -X direction), and a third sealing area 330a facing a fourth direction (e.g., the +Y direction) opposite to the third direction (e.g., the -Y direction). Correspondingly, the upper exterior material 131 may include a fourth sealing area 310b corresponding to the first sealing area 310a of the lower exterior material 133, a fifth sealing area 320b corresponding to the second sealing area 320a of the lower exterior material 133, and a sixth sealing area 330b corresponding to the third sealing area 330a of the lower exterior material 133. According to another embodiment, the upper exterior material 131 and the lower exterior material 133 may be provided in an independent form in which the upper and lower exterior materials are not mutually coupled. In this case, the lower exterior material 133 may further include a seventh sealing area facing the second direction (e.g., the -X direction), in addition to the above-mentioned first sealing area 310a, second sealing area 320a, and third sealing area 330a. Correspondingly, the upper exterior material 131 may further include an eighth sealing area corresponding to the seventh sealing area, in addition to the above-mentioned fourth sealing area 310b, fifth sealing area 310b, and sixth sealing area 310b. In an embodiment, the corresponding sealing areas between the upper exterior material 131 and the lower exterior material 133 may be sealed by a heat curing process or a photocuring process, and thus an internal space 135 in the exterior material 130 is sealed from the outside.

According to an embodiment, in the sealing process between the upper exterior material 131 and the lower exterior material 133, at least a portion of the electrode assembly 110a in which the first electrode tab 117a and the second electrode tab 119a are coupled to each other may be accommodated in the internal space 135 in the exterior 130. In an embodiment, when at least a portion of the electrode assembly 110a including the first electrode tab 117a and the second electrode tab 119a is accommodated in the internal space 135 in the exterior material 130, each of the first electrode tab 117a and the second electrode tab 119a may be interposed between the upper exterior material 131 and the lower exterior material 133. For example, each of the first electrode tab 117a and the second electrode tab 119a may be interposed between the first sealing area 310a, which is an edge of the lower exterior material 133 facing the first direction (e.g., the +X direction) and the fourth sealing area 310b, which is an edge of the upper exterior material 131 facing the first direction (e.g., the +X direction). According to an embodiment, in the sealing process between the first sealing area 310a of the lower exterior material 133 and the fourth sealing area 310b of the upper exterior material 131, a portion of the first electrode tab 117a and a portion of the second electrode tab 119a, which face the first direction (e.g., +X direction), may be drawn out (or exposed) to the outside of the sealed exterior material 130.

In an embodiment, the first electrode tab 117a may include a first area 410a, which overlaps the first sealing area 310a of the lower exterior material 133 and the fourth sealing area 310b of the upper exterior material 131, and the second electrode tab 119a may include a second area 410b, which overlaps the first sealing area 310a of the lower exterior material 133 and the fourth sealing area 310b of the upper exterior material 131. In various embodiments, the first area 410a of the first electrode tab 117a may include an area on the top surface (e.g., the surface facing the +Z direction) facing the fourth sealing area 310b of the upper exterior material 131 and an area on the bottom surface (e.g., the surface facing the -Z direction) facing the first sealing area 310a of the lower exterior material 133. Similarly, the second area 410b of the second electrode tab 119a may include an area on the top surface (e.g., the surface facing the +Z direction) facing the fourth sealing area 310b of the upper exterior material 131 and an area on the bottom surface (e.g., the surface facing the -Z direction) facing the first sealing area 310a of the lower exterior material 133.

In an embodiment, a first CTR 140a having characteristics in which electrical resistance thereof rapidly decreases at a predetermined critical temperature may be disposed in at least a portion of the first area 410a of the first electrode tab 117a. Similarly, a second CTR 140b having the same characteristics as the first CTR 140a may be disposed in at least a portion of the second area 410b of the second electrode tab 119a. According to various embodiments, the first CTR 140a and the second CTR 140b may be the same as or at least partially different from each other in shape and size. According to various embodiments, the position where the first CTR 140a is disposed on the first area 410a of the first electrode tab 117a and the position where the second CTR 140b is disposed on the second area 410b of the second electrode tab 119a may or may not relatively correspond to each other.

According to an embodiment, when the temperature of the battery 100 reaches the critical temperature, the first CTR 140a and the second CTR 140b may short-circuit at least some of the current discharged from the electrode assembly 110a to the exterior material 130. Due to the short-circuit of the current based on the first CTR 140a and the second CTR 140b, the battery 100 may be discharged, and thus the voltage of the battery 100 may be stabilized while being lowered. In addition, the temperature of at least one portion of the exterior material 130 through which the short-circuited current flows may increase, and from this, venting of the at least one portion of the exterior material 130 is accelerated so that ignition or explosion of the battery 100 can be prevented in advance.

According to an embodiment, the first CTR 140a and the second CTR 140b may contain a material having a high coefficient of thermal expansion depending on temperature (e.g., SrCO₃, PbO, Y₂O₃, VO₂, V₂O₄, CaCO₃, La₂O₃, CeO₂, NdzOs, Sm₂O₃, Dy₂O₃, Gd₂O₃, V₂O₅, Bl₂O₃, TazOs, NbzOs, Sb₂O₃, MnCO₃, Cu₂O₃, CrO₃, Li₂CO₃, Th₂O₃, Sc₂O₃, Fe₃(NO₃)₃, or a combination of at least two of these). In an embodiment, the predetermined critical temperatures of the first CTR 140a and the second CTR 140b may be determined within a range of 100 degrees C to 130 degrees C, and the temperature between 100 degrees C to 130 degrees C may be predetermined as the critical temperature while adjusting, for example, the weight ratio between the material having a high coefficient of thermal expansion and another arbitrary material.

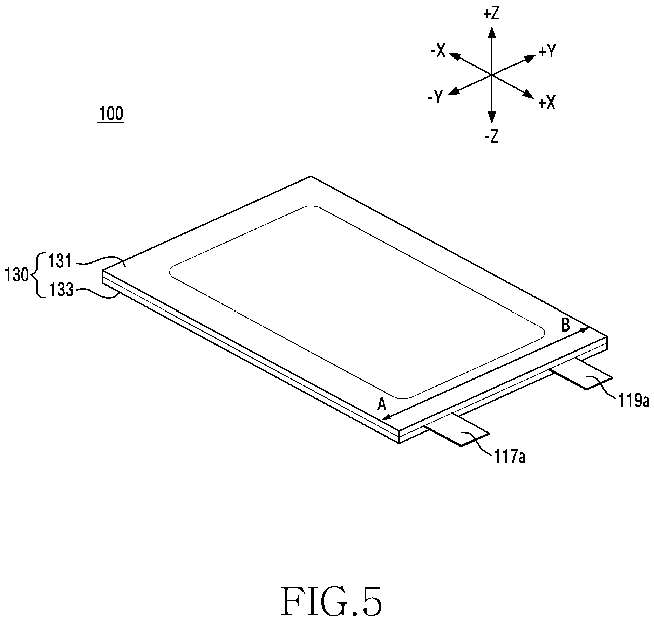

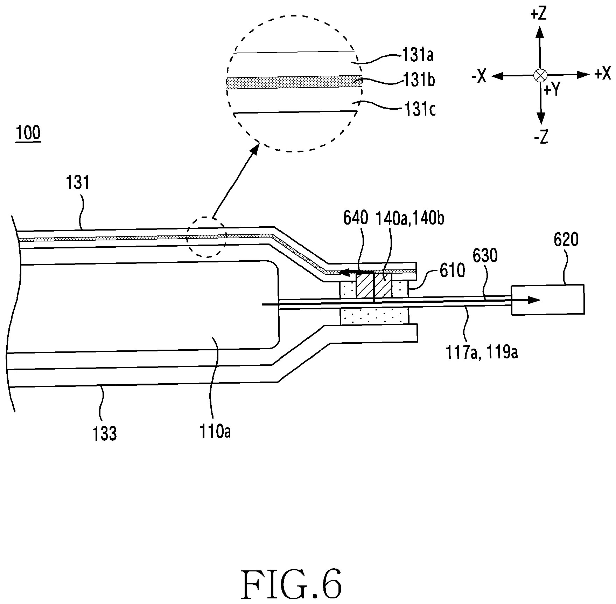

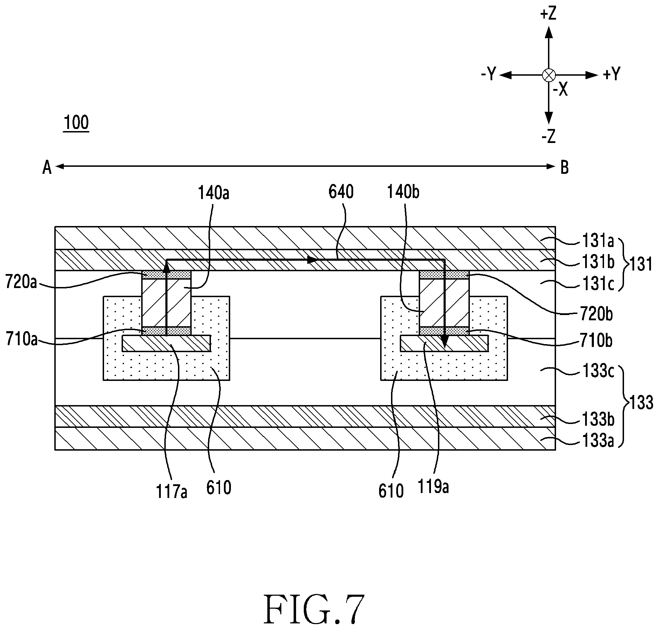

FIG. 5 is a view illustrating a battery 100 according to an embodiment, FIG. 6 is a view illustrating the inside of the battery 100 according to an embodiment viewed from one direction (e.g., the -Y direction in FIG. 5), and FIG. 7 is a cross-sectional view illustrating one area (e.g., area A-B in FIG. 5) of the battery 100 according to an embodiment viewed from another direction (e.g., the +X direction in FIG. 5).

Referring to FIGS. 5, 6, and 7, in a state in which at least a portion of the electrode assembly 110a is accommodated in the exterior material 130, one portion of each of the first electrode tab 117a and the second electrode tab 119a facing the first direction (e.g., the +X direction) and coupled (e.g., welded) to the electrode assembly 110a may be drawn out (or exposed) to the outside of the exterior material 130 to be electrically connected to an external component 620 (e.g., another battery or an electronic component). Based on this, each of the first electrode tab 117a and the second electrode tab 119a may form a first conductive path 630 between the electrode assembly 110a and the external component 620. According to an embodiment, in an environment where the temperature of the battery 100 is lower than the critical temperature (e.g., a temperature between 100 and 130 degrees C) predetermined for the above-mentioned first CTR 140a and the second CTR 140b, the first conductive path 630 may be used as a current path through which current discharged from the electrode assembly 110a is supplied to the external component 620 or a current path through which the current supplied from the external component 620 is charged to the electrode assembly 110a.

In an embodiment, the first CTR 140a and the second CTR 140b may be respectively disposed in the first area (e.g., the first area 410a in FIG. 4) of the first electrode tab 117a and the second area (e.g., the second area 410b in FIG. 4) of the second electrode tab 119a overlapping the first sealing area (e.g., the first sealing area 310a in FIG. 4) of the lower exterior material 133 and the fourth sealing area (e.g., the fourth sealing area 310b in FIG. 4) of the upper exterior material 131, which constitute the exterior material 130. For example, in the embodiment of FIGS. 6 and 7, the first CTR 140a may be disposed on the top surface (e.g., the surface facing the +Z direction) of the first area 410a of the first electrode tab 117a facing the fourth sealing area 310b of the upper exterior material 131, and the second CTR 140b may be disposed on the top surface (e.g., the surface facing the +Z direction) of the second area 410b of the second electrode tab 119a facing the fourth sealing area 310b. According to an embodiment, in the process of disposing the first CTR 140a and the second CTR 140b respectively in the first area 410a of the first electrode tab 117a and the second area 410b of the second electrode tab 119a, which overlap the first sealing area 310a of the lower exterior material 133 and the fourth sealing area 310b of the upper exterior material 131, one surface (e.g., the surface facing the -Z direction) of the first CTR 140a may be fixedly and electrically connected to the first electrode tab 117a based on a first conductive bonding member 710a and one surface (e.g., the surface facing the -Z direction) of the second CTR 140b may be fixedly and electrically connected to the second electrode tab 119a based on a second conductive bonding member 710b.

In an embodiment, each of the upper exterior material 131 and the lower exterior material 133 constituting the exterior material 130 may be formed by stacking a plurality of layers. For example, the upper exterior material 131 may be formed by laminating a nylon layer 131a, a metal (e.g., aluminum) layer 131b, and a non-stretched polypropylene layer 131c in order with reference to one direction (e.g., the -Z direction), and the lower exterior material 133 may be formed by laminating a nylon layer 133a, a metal layer 133b, and a non-stretched polypropylene layer 133c in reverse order with reference to the one direction (e.g., the -Z direction). According to an embodiment, in the process of sealing the first sealing area 310a of the lower exterior material 133 and the fourth sealing area 310b of the upper exterior material 131, the other surface (e.g., the surface facing the +Z direction) of the first CTR 140a may be fixedly and electrically connected to the metal layer 131b of the upper exterior material 131 based on a third conductive bonding member 720a, and the other surface (e.g., the surface facing the +Z direction) of the second CTR 140b may be fixedly and electrically connected to the metal layer 131b based on the fourth conductive bonding member 720b. For example, a portion of each of the first CTR 140a and the second CTR 140b (e.g., a portion including the other surface) may be in contact with the metal layer 131b of the upper exterior material 131 through the non-stretched polypropylene layer 131c of the upper exterior material 131 in the process of sealing the non-stretched polypropylene layer 131c of the upper exterior material 131 and the non-stretched polypropylene layer 133c of the lower exterior material 133 to each other by thermal curing or photocuring. In this regard, prior to the sealing process between the first sealing area 310a of the lower exterior material 133 and the fourth sealing area 310b of the upper exterior material 131, a portion of the non-stretched polypropylene layer 131c of the upper exterior material 131 may be removed. For example, a portion of the non-stretched polypropylene layer 131c of the upper exterior material 131 corresponding to the position of each of the first CTR 140a and the second CTR 140b may be removed such that a portion of each of the first CTR 140a and the second CTR 140b (e.g., a portion including the other surface) easily penetrates the non-stretched polypropylene layer 131c of the upper exterior material 131 and comes into contact with the metal layer 131b of the upper exterior material 131.

According to various embodiments, in the process of sealing the first sealing area 310a of the lower exterior material 133 and the fourth sealing area 310b of the upper exterior material 131 based on thermal curing or photocuring, a sealing member 610 may be disposed in an area around the first electrode tab 117a fixedly and electrically connected to the first CTR 140a and an area around the second electrode tab 119a fixedly and electrically connected to the second CTR 140b. The sealing member 610 may support sealing of the spaces between the first electrode tab 117a and the second electrode tab 119a and the non-stretched polypropylene layers 131c and 133c included in the exterior material 130, for example, in the thermal curing or photocuring process.

According to an embodiment, the first CTR 140a and the second CTR 140b may form a second conductive path 640 between the electrode assembly 110a and the metal layer 131b of the upper exterior material 131. In this regard, when the temperature of the battery 100 reaches the critical temperature (e.g., a temperature between 100 and 130 degrees C) predetermined for the first CTR 140a and the second CTR 140b, the electrical resistance of the first CTR 140a and the second CTR 140b may be rapidly lowered. Based on this, the second conductive path 640 may be used as a current path for short-circuiting current discharged from the electrode assembly 110a to the metal layer 131b of the upper exterior material 131 in an environment where the temperature of the battery 100 is equal to or higher than the critical temperature. For example, when the temperature of the battery 100 reaches the critical temperature or higher, as the electrical resistance of the first CTR 140a rapidly decreases, the current discharged from the electrode assembly 110a may be short-circuited from the first electrode tab 117a to the metal layer 131b of the upper exterior material 131 via the first CTR 140a. The current short-circuited by the metal layer 131b may flow to the second electrode tab 119a, for example, via the second CTR 140b, and thus the short-circuit state of the battery 100 in which the first electrode tab 117a and the second electrode tab 119a are electrically connected to each other may be implemented. In an embodiment, the short-circuit state of the battery 100 may lead to the discharge state of the battery 100, and the voltage of the battery 100 may be lowered depending on the discharge state and stabilized.

In the embodiment described with reference to FIGS. 6 and 7, the first CTR 140a and the second CTR 140b are illustrated as being respectively disposed on the top surface (e.g., the surface facing the +Z direction) of the first area 410a of the first electrode tab 117a facing the fourth sealing area 310b of the upper exterior material 131 and the top surface (e.g., the surface facing the +Z direction) of the second area 410b of the second electrode tab 119a facing the fourth sealing area 310b, but the disclosure is not limited thereto. For example, the first CTR 140a and the second CTR 140b may be respectively disposed on the bottom surface (e.g., the surface facing the -Z direction) of the first area 410a of the first electrode tab 117a facing the first sealing area 310a of the lower exterior material 133 and the bottom surface (e.g., the surface facing the -Z direction) of the second area 410b of the second electrode tab 119a facing the first sealing area 310a. In this case, the first CTR 140a and the second CTR 140b may form a second conductive path between the electrode assembly 110a and the metal layer 133b of the lower exterior material 133. As another example, when the first CTR 140a is disposed on the top surface (e.g., the surface facing the +Z direction) of the first area 410a of the first electrode tab 117a, the second CTR 140b may be disposed on the bottom surface (e.g., the surface facing the -Z direction) of the second area 410b of the second electrode tab 119a. In contrast, when the first CTR 140a is disposed on the bottom surface (e.g., the surface facing the -Z direction) of the first area 410a of the first electrode tab 117a, the second CTR 140b may be disposed on the top surface (e.g., the surface facing the +Z direction) of the second area 410b of the second electrode tab 119a. In this regard, the upper exterior material 131 and the lower exterior material 133 may be provided in a state in which edge areas facing one direction (e.g., the -X direction) are coupled to each other, and in this case, the metal layer 131b of the upper exterior material 131 and the metal layer 133b of the lower exterior material 133 may be electrically connected to each other in an area corresponding to the one direction (e.g., the -X direction). Based on this, the first CTR 140a and the second CTR 140b disposed to face opposite directions may form the second conductive path between the electrode assembly 110a and the metal layers 131b and 133b of the exterior material 130.

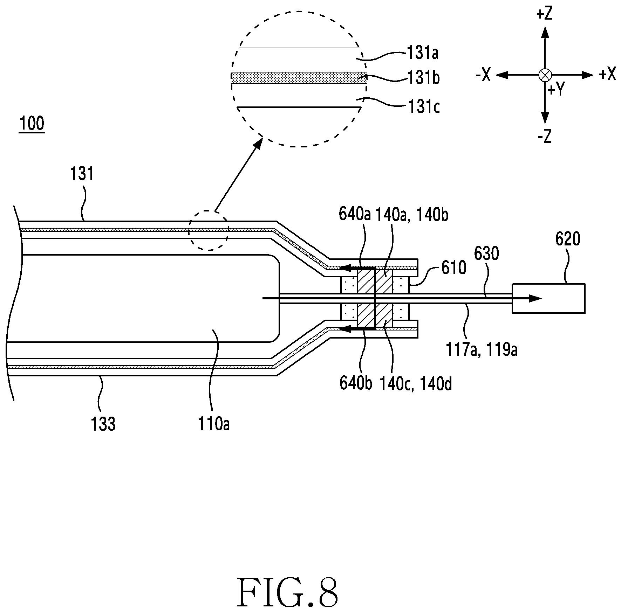

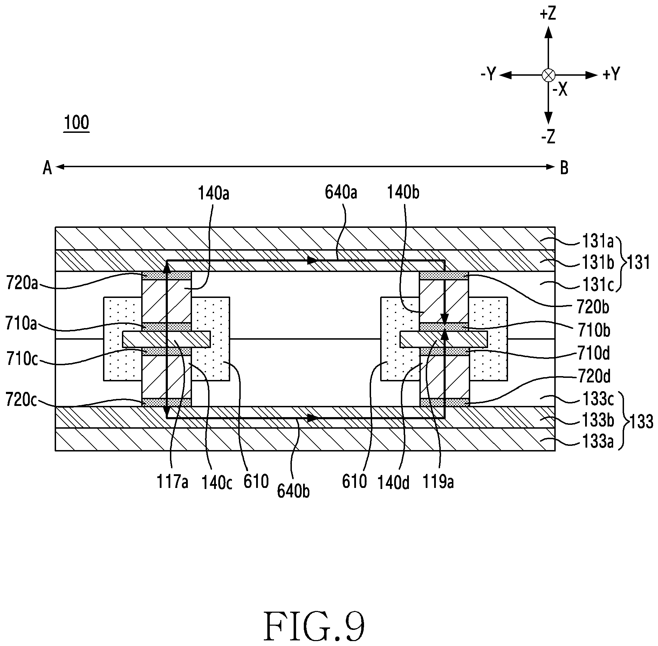

FIG. 8 is a view illustrating the inside of the battery 100 according to another embodiment viewed from one direction (e.g., the -Y direction in FIG. 5), and FIG. 9 is a cross-sectional view illustrating one area (e.g., area A-B in FIG. 5) of the battery 100 according to another embodiment viewed from another direction (e.g., the +X direction in FIG. 5).

At least some of the components of the battery illustrated in FIGS. 8 and 9 may be the same as the components of the battery described with reference to FIGS. 6 and 7, and in the following description of the embodiment to be given with reference to FIGS. 8 and 9, the same reference numerals may be assigned to the same components as those of the battery described above, and redundant descriptions of the corresponding components may be omitted.

Referring to FIGS. 5, 8, and 9, a plurality of CTRs 140a and 140c may be disposed in a first area (e.g., the first area 410a in FIG. 4) of the first electrode tab 117a overlapping a first sealing area (e.g., the first sealing area 310a in FIG. 4) of the lower exterior material 133 and a fourth sealing area (e.g., the fourth sealing area 310b in FIG. 4) of the upper exterior material 131 of the exterior material 130, and similarly, a plurality of CTRs 140b and 140d may also be disposed in a second area (e.g., the second area 410b in FIG. 4) of the second electrode tab 119a. For example, in the embodiments of FIGS. 8 and 9, the plurality of CTRs 140a and 140c disposed in the first area 410a of the first electrode tab 117a may include a first CTR 140a disposed on the top surface (e.g., the surface facing the +Z direction) of the first area 410a and a third CTR 140c disposed on the bottom surface (e.g., the surface facing the -Z direction) of the first area 410a. For example, in the embodiments of FIGS. 8 and 9, the plurality of CTRs 140b and 140d disposed in the second area 410b of the second electrode tab 119a may include a second CTR 140b disposed on the top surface (e.g., the surface facing the +Z direction) of the second area 410b and a fourth CTR 140d disposed on the bottom surface (e.g., the surface facing the -Z direction) of the second area 410b. According to various embodiments, the first CTR 140a and the third CTR 140c may be formed to have the same shape and size, and may be disposed to be aligned with reference to one direction (e.g., the +Z direction or the -Z direction). Similarly, the second CTR 140b and the fourth CTR 140d may be formed to have the same shape and size, and may be disposed to be aligned with reference to one direction (e.g., the +Z direction or the -Z direction). In various embodiments, the first CTR 140a, the second CTR 140b, the third CTR 140c, and the fourth CTR 140d may be formed to have the same shape and size, or one pair (e.g., the first CTR 140a and the third CTR 140c or the second CTR 140b and the fourth CTR 140d) may be formed to have a shape and size different from those of another pair (e.g., the second CTR 140b and the fourth CTR 140d or the first CTR 140a and the third CTR 140c).

According to an embodiment, in the process of disposing the first CTR 140a and the second CTR 140b respectively on the top surface of the first area 410a of the first electrode tab 117a and the top surface of the second area 410b of the second electrode tab 119a, one surface (e.g., the surface facing the -Z direction) of the first CTR 140a may be fixedly and electrically connected to the first electrode tab 117a based on a first conductive bonding member 710a and one surface (e.g., the surface facing the -Z direction) of the second CTR 140b may be fixedly and electrically connected to the second electrode tab 119a based on a second conductive bonding member 710b. Similarly, in the process of disposing the third CTR 140c and the fourth CTR 140d respectively on the bottom surface of the first area 410a of the first electrode tab 117a and the bottom surface of the second area 410b of the second electrode tab 119a, one surface (e.g., the surface facing the +Z direction) of the third CTR 140c may be fixedly and electrically connected to the first electrode tab 117a based on a third conductive bonding member 710c and one surface (e.g., the surface facing the +Z direction) of the fourth CTR 140d may be fixedly and electrically connected to the second electrode tab 119a based on a fourth conductive bonding member 710d.

According to an embodiment, in the process of sealing the first sealing area 310a of the lower exterior material 133 and the fourth sealing area 310b of the upper exterior material 131, the other surface (e.g., the surface facing the +Z direction) of the first CTR 140a and the other surface (e.g., the surface facing the +Z direction) of the second CTR 140b may be fixedly and electrically connected to the metal layer 131b of the upper exterior material 131 based on the fifth conductive bonding material 720a and the sixth conductive bonding member 720b, respectively. Correspondingly, in the process of sealing the first sealing area 310a and the fourth sealing area 310b, the other surface (e.g., the surface facing the -Z direction) of the third CTR 140c and the other surface (e.g., the surface facing the -Z direction) of the fourth CTR 140d may be fixedly and electrically connected to the metal layer 133b of the lower exterior material 133 based on the seventh conductive bonding material 720c and the eighth conductive bonding member 720d, respectively.

According to an embodiment, the first CTR 140a and the second CTR 140b may form a second conductive path 640a between the electrode assembly 110a and the metal layer 131b of the upper exterior material 131, and in an environment where the temperature of the battery 100 is equal to or higher than a critical temperature (e.g., a temperature between 100 and 130 degrees C), the second conductive path 640a may be used as a current path through which the current discharged from the electrode assembly 110a is short-circuited to the metal layer 131b of the upper exterior material 131. According to an embodiment, the third CTR 140c and the fourth CTR 140d may form a second conductive path 640b between the electrode assembly 110a and the metal layer 133b of the lower exterior material 133, and in an environment where the temperature of the battery 100 is equal to or higher than the critical temperature, the second conductive path 640b may be used as a current path through which the current discharged from the electrode assembly 110a is short-circuited to the metal layer 133b of the lower exterior material 133.

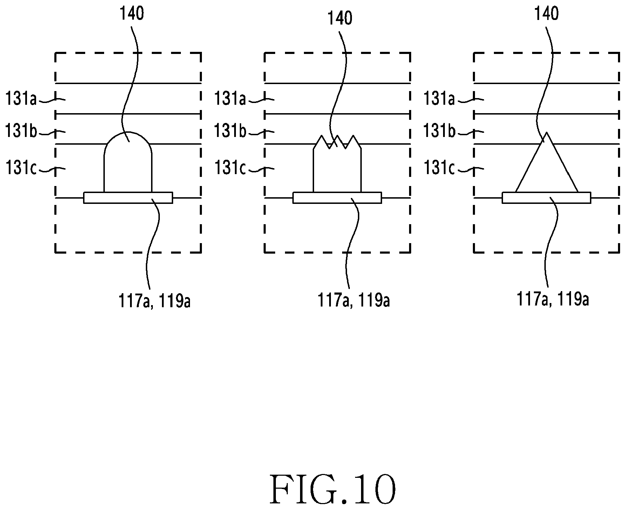

FIG. 10 is a view illustrating various shapes of a CTR 140 according to an embodiment.

At least some of the components of the battery illustrated in FIGS. 10 and 9 may be the same as the components of the battery described with reference to FIGS. 6 and 7, and in the following description of the embodiment to be given with reference to FIG. 10, the same reference numerals may be assigned to the same components as those of the battery described above, and redundant descriptions of the corresponding components may be omitted.

Referring to FIGS. 5 and 10, at least one CTR 140 (e.g., at least one of the above-mentioned first CTR 140a in FIG. 9, second CTR 140b in FIG. 9, third CTR 140c in FIG. 9, and fourth CTR 140d in FIG. 9) according to an embodiment may include various shapes to effectively penetrate the non-stretched polypropylene layer 131c and/or the non-stretched polypropylene layer 133c and come into contact with the metal layer 131b in the process in which the non-stretched polypropylene layer 131c of the upper exterior material 131 and the non-stretched polypropylene layer 133c of the lower exterior material 133 are sealed to each other by thermal curing or photocuring. For example, one surface (e.g., the surface facing the non-stretched polypropylene layer 131c and/or the non-stretched polypropylene layer 133c) of at least one CTR 140 may have a shape including at least one of an obtuse angle (e.g., an angle greater than 90 degrees and less than 180 degrees), a right angle (e.g., 90 degrees), an acute angle (e.g., an angle greater than 0 degrees and less than 90 degrees), and multiple protrusions. As another example, the at least one CTR 140 may have a pyramidal shape facing one direction (e.g., a direction toward the non-stretched polypropylene layer 131c and/or the non-stretched polypropylene layer 133c). Although not illustrated, a conductive bonding member may be disposed between the at least one CTR 140 and the electrode tab 117a and/or the electrode tab 119a to support fixation and electrical connection between the at least one CTR 140 and the electrode tab 117a and/or the electrode tab 119a, and a conductive bonding member may be disposed or omitted between the at least one CTR 140 and the metal layers (e.g., 131b) of the exterior materials 131 and/or 133.

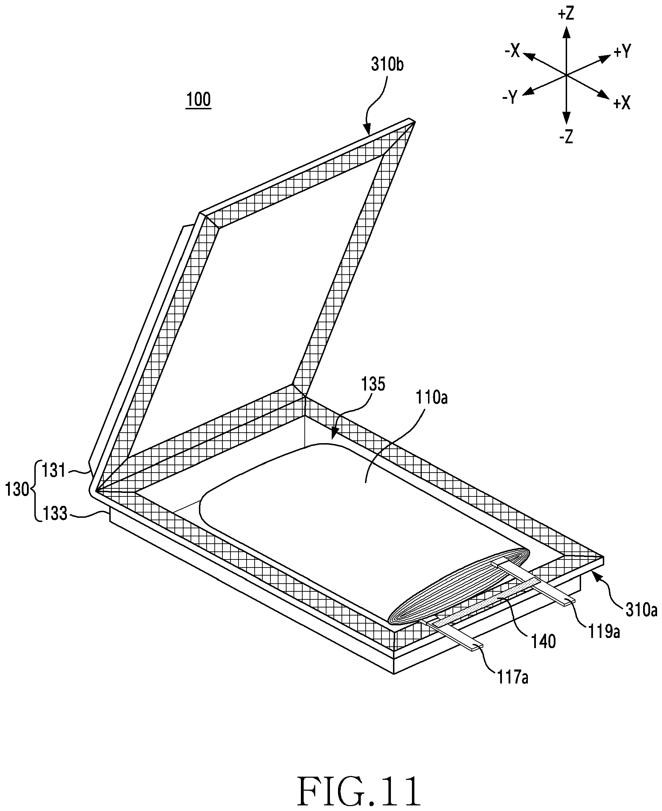

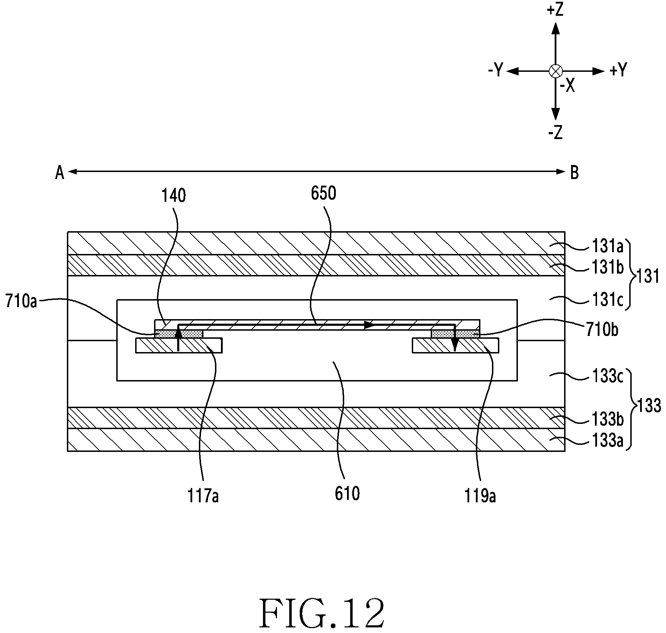

FIG. 11 is a view illustrating an electrode assembly 110a accommodated in an exterior material 130 according to another embodiment, and FIG. 12 is a view illustrating a cross section of one area of the battery 100 according to another embodiment (e.g., one area corresponding to area A-B in FIG. 5 with reference to the battery 100 in the state in which the upper exterior material 131 and the lower exterior material 133 illustrated in FIG. 11 are sealed) viewed from one direction (e.g., +X direction in FIG. 11).

At least some of the components of the battery illustrated in FIGS. 11 and 12 may be the same as the components of the battery described with reference to FIGS. 4, 6, and 7, and in the following description of the embodiment to be given with reference to FIGS. 11 and 12, the same reference numerals may be assigned to the same components as those of the battery described above, and redundant descriptions of the corresponding components may be omitted.

Referring to FIGS. 5, 11, and 12, in a first area (e.g., the first area 410a in FIG. 4) of the first electrode tab 117a and a second area (e.g., the second area 410b in FIG. 4) of the second electrode tab 119a overlapping the first sealing area 310a of the lower exterior material 133 and the fourth sealing area 310b of the upper exterior material 131 of the exterior material 130, a single CTR 140 sharing (or connected to) the areas 410a and 410b may be disposed. For example, in the embodiment of FIGS. 11 and 12, the single CTR 140 may be disposed to extend to another area without interruption from an area of one of the top surface (e.g., the surface facing the +Z direction) of the first area 410a of the first electrode tab 117a facing the fourth sealing area 310b of the upper exterior material 131, and the top surface (e.g., the surface facing the +Z direction) of the second area 410b of the second electrode tab 119a facing the fourth sealing area 310b.

According to an embodiment, in the process of disposing the single CTR 140 to share (or to be connected to) the first area 410a of the first electrode tab 117a and the second area 410b of the second electrode tab 119a, one surface (e.g., the surface facing the -Z direction) of the single CTR 140 may be fixedly and electrically connected to the first electrode tab 117a based on a first conductive bonding member 710a and may be fixedly and electrically connected to the second electrode tab 119a based on a second conductive bonding member 710b. According to an embodiment, in the process of sealing the first sealing area 310a of the lower exterior material 133 and the fourth sealing area 310b of the upper exterior material 131, the other surface (e.g., the surface facing the +Z direction) of the single CTR 140 may not penetrate the non-stretched polypropylene layer 131c of the upper exterior material 131 so as to form a predetermined separation distance (or not in contact) with the metal layer 131b of the upper exterior material 131. For example, the single CTR 140 may not come into physical contact with the metal layer 131b of the upper exterior material 131 by not completely penetrating the non-stretched polypropylene layer 131c of the upper exterior material 131. According to an embodiment, in the process of sealing the first sealing area 310a of the lower exterior material 133 and the fourth sealing area 310b of the upper exterior material 131 based on thermal curing or photocuring, in the area around the first electrode tab 117a and the second electrode tab 119a, a sealing member 610 surrounding at least a portion of the single CTR 140, at least a portion of the first electrode tab 117a, and at least a portion of the second electrode tab 119a may be disposed.

According to an embodiment, the single CTR 140 may form a third conductive path 650 between the first electrode tab 117a and the second electrode tab 119a. The third conductive path 650 may be used as a current path through which the current discharged from the electrode assembly 110a between the first electrode tab 117a and the second electrode tab 119b is short-circuited, for example, in an environment where the temperature of the battery 100 is equal to or higher than a critical temperature (e.g., a temperature between 100 and 130 degrees C).

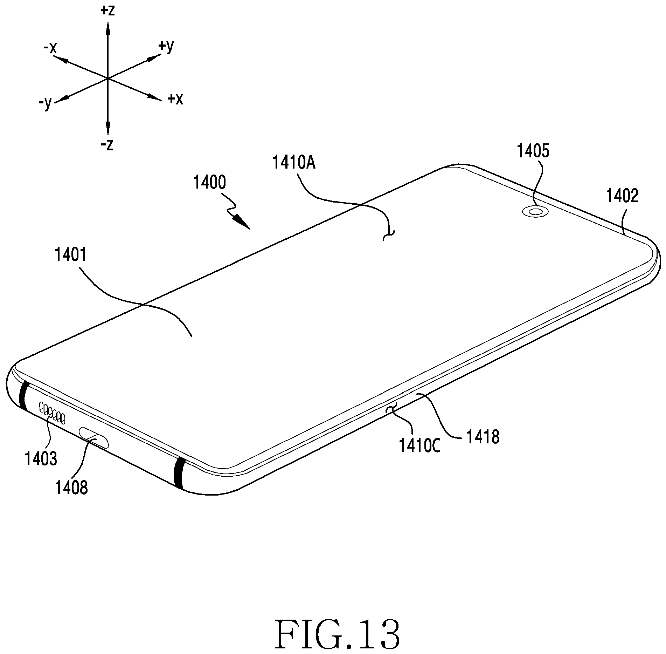

Hereinafter, an electronic device including a battery 100 according to above-described various embodiments may be exemplified with reference to FIGS. 13, 14, and 15.

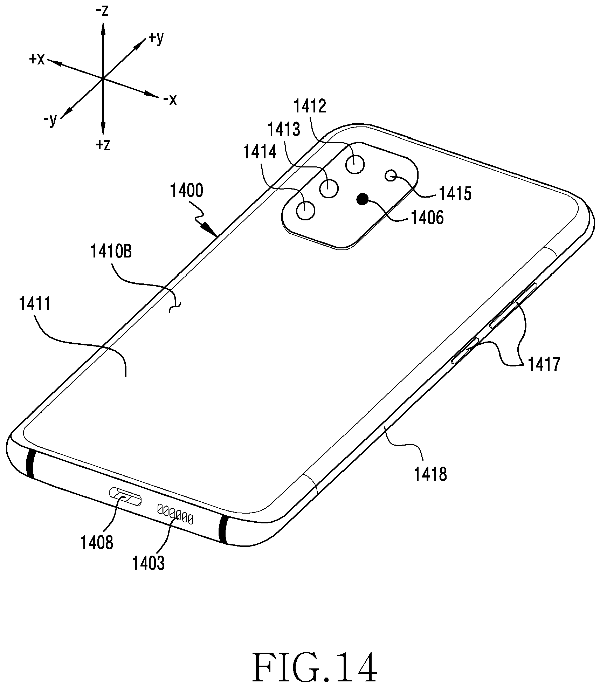

FIG. 13 is a view illustrating the front surface of an electronic device according to an embodiment, and FIG. 14 is a view illustrating the rear surface of the electronic device according to an embodiment.

Referring to FIGS. 13 and 14, an electronic device 1400 according to an embodiment may include a housing that includes a first surface (or front surface) 1410A facing the +Z direction, a second surface (or rear surface) 1410B facing the -Z direction opposite to the +Z direction, and a third surface (or side surface) 1410C facing at least one of the +X direction, the -X direction perpendicular to the +Z direction or the -Z direction and surrounding the space between the first surface 1410A and the second surface 1410B. In various embodiments, the housing may refer to a structure defining some of the first surface 1410A, the second surface 1410B, and the third surface 1410C.

According to an embodiment, at least a portion of the first surface 1410A may be defined by a substantially transparent front surface plate 1402 (e.g., a glass plate or a polymer plate including various coating layers). In various embodiments, the front surface plate 1402 may include a curved portion bent and seamlessly extending from the first surface 1410A toward the rear surface plate 1411 defining the second surface 1410B in at least one side edge portion.

According to an embodiment, the second surface 1410B may be defined by the rear surface plate 1411 which is substantially opaque. The rear surface plate 1411 may include, for example, coated or colored glass, ceramic, polymer, metal (e.g., aluminum, stainless steel (STS), or magnesium), or a combination of two or more of these materials. In various embodiments, the rear surface plate 1411 may include a curved portion bent and seamlessly extending from the second surface 1410B toward the front surface plate 1402 defining the first surface 1410A in at least one side edge portion.

According to an embodiment, the third surface 1410C may be defined by a side surface member 1418 (or bracket) coupled to the front surface plate 1402 and the rear surface plate 1411. In various embodiments, the side surface member 1418 may include at least one of metal and polymer. In various embodiments, the rear surface plate 1411 and the side surface member 1418 may be configured integrally and may include the same material (e.g., a metal material such as aluminum).

According to an embodiment, the electronic device 1400 may include at least one of a display 1401, an audio module 1403, at least one camera module (a least one of 1405, 1412, 1413, 1414, and 1415), a flash 1406, a key input device 1417, and a connector hole 1408. In various embodiments, in the electronic device 1400, at least one of the above-mentioned components (e.g., the key input device 1417) may not be included, or other components may be additionally included. For example, the electronic device 1400 may additionally include a sensor module, and the sensor module may include at least one of an optical sensor, an ultrasonic sensor, and a capacitive sensor. In an embodiment, the sensor module may be disposed in at least one of a lower portion of a screen display area of the display 1401 (e.g., an area of the display 1401 visible through the front surface plate 1402) and a peripheral area of the display 1401. In various embodiments, the electronic device 1400 may further include a light-emitting element, and the light-emitting element may be disposed at a position adjacent to the display 1401 in an area provided by the front surface plate 1402. The light-emitting element may provide, for example, the status information of the electronic device 1400 in an optical form. As another example, the light-emitting device may provide a light source interlocked with the operation of the first camera module 1405. In various embodiments, the light-emitting device may include at least one of an LED, an IR LED, and a xenon lamp.

The display 1401 may be visible from the outside of the electronic device 1400 through a significant portion of the front surface plate 1402. In various embodiments, the edges of the display 1401 may be provided to be substantially the same as the outer peripheral shape (e.g., a curved surface) of the front surface plate 1402 adjacent thereto. In various embodiments, the distance between the outer periphery of the display 1401 and the outer periphery of the front plate 1402 may be substantially constant in order to enlarge the visually exposed area of the display 1401. In various embodiments, a recess, a notch, or an opening may be provided in a portion of a screen display area of the display 1401, and the electronic device 1400 may include an electronic component aligned with the recess, the notch, or the opening, such as a first camera module 1405, a proximity sensor, or an illuminance sensor.

In various embodiments, the electronic device 1400 may include at least one of at least one camera module (at least one of 1405, 1412, 1413, 1414, and 1415), a fingerprint sensor, and flash 1406 disposed below the screen display area of the display 1401. In various embodiments, the display 1401 may be coupled to or disposed adjacent to at least one of a touch sensing circuit, a pressure sensor capable of measuring the intensity (e.g., pressure) of a touch, and a digitizer detecting a magnetic field-type stylus pen.

The audio module 1403 may include at least one of a microphone hole and a speaker hole. A microphone configured to acquire external sound may be disposed inside the microphone hole, and, for example, a plurality of microphones may be disposed to detect a direction of sound. In various embodiments, the microphone hole and the speaker hole may be implemented as a single hole (e.g., the audio module 1403), or a speaker (e.g., a piezo speaker) may be included without the speaker hole on the electronic device 1400. In various embodiments, the speaker hole may include at least one of an external speaker hole and a receiver hole for communication.

In an embodiment, by using a sensor module (not illustrated), the electronic device 1400 may generate an electrical signal or data value corresponding to an internal operating status thereof or an external environmental condition. The sensor module may include, for example, at least one of a proximity sensor disposed on the first surface 1410A of the housing and a biometric sensor (e.g., a heart rate monitoring (HRM) sensor) disposed on the second surface 1410B of the housing. In various embodiments, the sensor module may further include at least one of a gesture sensor, a gyro sensor, an atmospheric pressure sensor, a magnetic sensor, an acceleration sensor, a grip sensor, a color sensor, an infrared (IR) sensor, a temperature sensor, and a humidity sensor.

A first camera module 1405 among the at least one camera module (at least one of 1405, 1412, 1413, 1414, and 1415) may be disposed on the first surface 1410A of the electronic device 1400, and a second camera module (at least one of 1412, 1413, 1414, and 1415) and a flash 1406 may be disposed on the second surface 1410B of the electronic device 1400. The at least one camera module (at least one of the 1405, 1412, 1413, 1414, and 1415) may include at least one of, for example, one or multiple lenses, an image sensor, and an image signal processor. In various embodiments, the multiple lenses (e.g., a wide-angle lens and a telephoto lens) and the image sensor may be disposed on one surface of the electronic device 1400. The flash 1406 may include, for example, a light-emitting diode or a xenon lamp.

The key input device 1417 may be disposed on the third surface 1410C of the housing. In various embodiments, the electronic device 1400 may not include some or all of the above-mentioned key input devices 1417, and the key input devices 1417, which are not included in the electronic device 1401, may be implemented in a form, such as soft keys, on the display 1401. In various embodiments, the key input device 1417 may include at least a portion of the fingerprint sensor disposed on the second surface 1410B of the housing.

The connector hole 1408 may accommodate at least one of a connector configured to transmit/receive at least one of power and data to/from an external electronic device and a connector configured to transmit/receive an audio signal to/from the external electronic device. The connector hole 1408 may accommodate at least one of, for example, a USB connector and an earphone jack. In various embodiments, the electronic device 1400 may transmit/receive at least one of power and data or an audio signal to/from an external electronic device without the connector hole 1408.

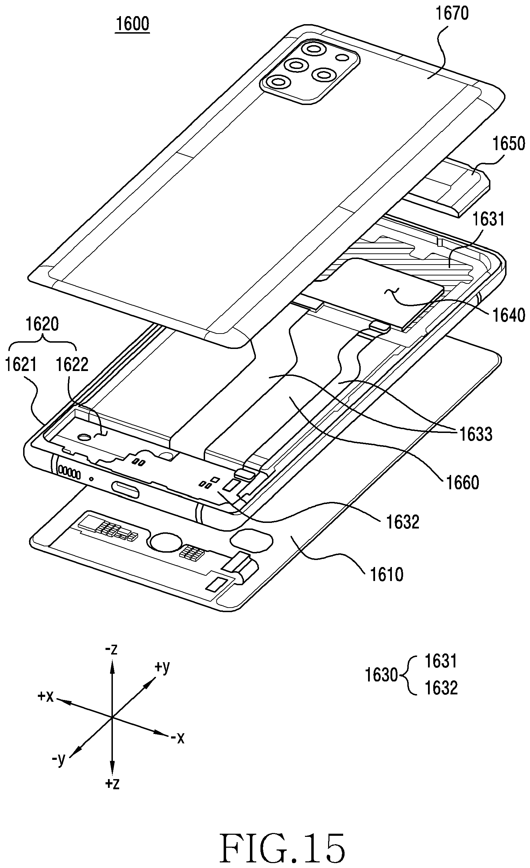

FIG. 15 is a view illustrating an electronic device according to an embodiment in an exploded state.

Referring to FIG. 15, an electronic device 1600 (e.g., the electronic device 1400 in FIGS. 13 and 14) according to an embodiment may include at least one of a front surface plate (e.g., the front surface plate 1402 in FIG. 13), a display 1610 (e.g., the display 1401 in FIG. 13), a side surface member 1620 (e.g., the side surface member 1418 in FIGS. 13 and 14) , at least one printed circuit board 1630, a first support structure 1640 (e.g., a shield can), a second support structure 1650, a battery 1660 (e.g., the battery 100 in FIG. 4 or FIG. 11), and a rear surface plate 1670 (e.g.; the rear surface plate 1411 in FIG. 14). One or more of the components of the electronic device 1600 illustrated in FIG. 15 may be the same as or similar to the components described with reference to FIGS. 13 and 14, and redundant descriptions may be omitted below.

According to an embodiment, the side surface member 1620 may include at least one of a metal frame structure 1621 and a support member 1622. In an embodiment, the metal frame structure 1621 may be formed of a conductive material (e.g., metal) to define the side surface (e.g., the third surface 1410C of FIG. 13) of the electronic device 1600. The metal frame structure 1621 may include, for example, at least one conductive portion and at least one non-conductive portion insulating the at least one conductive portion. The at least one conductive portion may function as an antenna radiator that transmits/receives an RF signal of a predetermined frequency band. In an embodiment, the support member 1622 may include at least one of a metal material and a non-metal material (e.g., polymer), and may provide a space in which electronic components may be disposed within the electronic device 1600. For example, the display 1610 may be disposed on one surface (e.g., the surface facing the +Z direction) of the support member 1622, and at least one printed circuit board 1630 may be disposed on the other surface (e.g., the surface facing the -Z direction) of the support member 1622. In various embodiments, the support member 1622 may be connected to the metal frame structure 1621 or may be configured integrally with the metal frame structure 1621.

In an embodiment, multiple electronic components may be disposed on the at least one printed circuit board 1630. For example, at least one of a processor, a memory, and an interface may be disposed on at least one printed circuit board 1630. The processor may include, for example, at least one of a central processing unit, an application processor, a graphics processing unit, an image signal processor, a sensor hub processor, and a communication processor. The memory may include, for example, at least one of a volatile memory and a non-volatile memory. The interface may include, for example, at least one of a high-definition multimedia interface (HDMI), a universal serial bus (USB) interface, an SD card interface, and an audio interface. In an embodiment, the interface may electrically or physically connect the electronic device 1600 to an external electronic device and may include at least one of a USB connector, an SD card, an MMC connector, and an audio connector.

According to an embodiment, the at least one printed circuit board 1630 may include at least one of a first printed circuit board 1631 and a second printed circuit board 1632. In an embodiment, the first printed circuit board 1631 may be disposed in one area (e.g., one area facing the +Y direction) of the support member 1622, and the second printed circuit board 1632 may be disposed in another area (e.g., one area facing the -Y direction) of the support member 1622 spaced apart from the first printed circuit board 1631. In an embodiment, the first printed circuit board 1631 and the second printed circuit board 1632 may be electrically connected to each other via an electrical connection member 1633. The electrical connection member 1633 may include, for example, at least one of a flexible printed circuit board, a coaxial cable, and a board to board (B to B) connector. The structure of the at least one printed circuit board 1630 is not limited to the illustrated example, and in various embodiments, the at least one printed circuit board 1630 may be implemented as a single printed circuit board.

In an embodiment, the first support structure 1640 (e.g., a shield can) may include a conductive material (e.g., metal) and may be disposed on the at least one printed circuit board 1630. According to an embodiment, a patch antenna may be disposed in at least one area (e.g., one area facing the -Z direction) of the first support structure 1640, and the first support structure 1640 may support the patch antenna. The patch antenna may function as, for example, an antenna radiator that transmits/receives an ultra-wide band RF signal.

In an embodiment, the first support structure 1640 may shield the multiple electronic components disposed on the at least one printed circuit board 1630. For example, the first support structure 1640 may be disposed to surround or cover the multiple electronic components to block noise generated from the multiple electronic components.

According to an embodiment, the second support structure 1650 may be formed of a material different from that of the first support structure 1640. For example, the second support structure 1650 may be formed of a non-conductive material (e.g., plastic), but is not limited thereto. In an embodiment, the second support structure 1650 may be disposed in one area of the at least one printed circuit board 1630 so that the multiple electronic components disposed on the at least one printed circuit board 1630 can be prevented from being damaged by external impact. In an embodiment, the second support structure 1650 may be disposed not to overlap the first support structure 1640 when viewed from the upper side of the at least one printed circuit board 1630 (e.g., the upper side facing the -Z direction). In another embodiment, the second support structure 1650 may be disposed to overlap at least a portion of the first support structure 1640.

According to an embodiment, the battery 1660 may supply power to at least one component of the electronic device 1600 and may include, for example, a non-rechargeable primary battery, a rechargeable secondary battery, or a fuel cell. In an embodiment, at least a portion of the battery 1660 may be disposed on substantially the same plane as the at least one printed circuit board 1630. In various embodiments, the battery 1660 may be integrally disposed inside the electronic device 1600 or may be removably disposed on the electronic device 1600.

According to an embodiment, the rear surface plate 1670 may define the rear surface (e.g., the second surface 1410B in FIG. 14) of the electronic device 1600. For example, the rear surface plate 1670 may protect internal components of the electronic device 1600 from external impact or inflow of foreign substances.

A battery (e.g., the battery 100 in FIG. 6) according to the above-described various embodiments may include an electrode assembly (e.g., the electrode assembly 110a in FIG. 6) including a first electrode tab (e.g., the first electrode tab 117a in FIG. 6) and a second electrode tab (e.g., the second electrode tab 119a in FIG. 6), an exterior material (e.g., the exterior material 130 in FIG. 6) including an internal space configured to accommodate at least a portion of the electrode assembly, and a first critical temperature resistor (CTR) (e.g., the first CTR 140a in FIG. 6) disposed in an area of the first electrode tab and a second CTR (e.g., the second CTR 140b in FIG. 6) disposed in an area of the second electrode tab, wherein the first CTR and the second CTR overlap an edge of the exterior material in one direction in a state in which at least a portion of the electrode assembly is accommodated in the internal space of the exterior material.

According to various embodiments, in the state in which at least a portion of the electrode assembly is accommodated in the internal space of the exterior material, at least one of the first electrode tab and the second electrode tab may be electrically connected to an external component (e.g., the external component 620 in FIG. 6) to provide a first conductive path (e.g., the first conductive path 630 in FIG. 6) between the electrode assembly and the external component.

According to various embodiments, in the state in which at least a portion of the electrode assembly is accommodated in the internal space of the exterior material, the first CTR and the second CTR may be electrically connected to a metal layer included in the exterior material to provide a second conductive path (e.g., the second conductive path 640 in FIG. 6) between the electrode assembly and the exterior material.

According to various embodiments, the first conductive path may be used as a current path between the electrode assembly and the external component when the battery has a temperature lower than a critical temperature predetermined for the first CTR and the second CTR.

According to various embodiments, the second conductive path may be used as a current path between the electrode assembly and the metal layer of the exterior material when the battery has a temperature equal to or higher than the critical temperature predetermined for the first CTR and the second CTR.

According to various embodiments, the exterior material may include an upper exterior material (e.g., the upper exterior material 131 in FIG. 6) and a lower exterior material (e.g., the lower exterior material 133 in FIG. 6) which are sealed to each other to form the exterior material.

According to various embodiments, an edge of the exterior material in one direction may include a first sealing area of the upper exterior material that corresponds to the edge in the one direction and a second sealing area of the lower exterior material that corresponds to the edge in the one direction.

According to various embodiments, the first CTR may be disposed in one area on one surface of the first electrode tab that faces the first sealing area of the upper exterior material, and the second CTR may be disposed in one area on one surface of the second electrode tab that faces the first sealing area of the upper exterior material.

According to various embodiments, the first CTR may be electrically connected to the first electrode tab and the metal layer included in the upper exterior material based on the first conductive bonding member and the second conductive bonding member, respectively, and the second CTR may be electrically connected to the second electrode tab and the metal layer included in the upper exterior material based on the third conductive bonding member and the fourth conductive bonding member, respectively.

According to various embodiments, the first CTR may be disposed in one area on one surface of the first electrode tab that faces the second sealing area of the lower exterior material, and the second CTR may be disposed in one area on one surface of the second electrode tab that faces the second sealing area of the lower exterior material.

According to various embodiments, the first CTR may be electrically connected to the first electrode tab and the metal layer included in the lower exterior material based on a fifth conductive bonding member and a sixth conductive bonding member, respectively, and the second CTR may be electrically connected to the second electrode tab and the metal layer included in the lower exterior material based on a seventh conductive bonding member and an eighth conductive bonding member, respectively.

According to various embodiments, the battery may further include a third CTR (e.g., the third CTR 140c in FIG. 9) disposed in one area of the first electrode tab and a fourth CTR (e.g., the fourth CTR 140d in FIG. 9) disposed in one area of the second electrode tab.

According to various embodiments, the first CTR may be disposed in one area on one surface of the first electrode tab that faces the first sealing area of the upper exterior material, and the second CTR may be disposed in one area on one surface of the second electrode tab that faces the first sealing area of the upper exterior material.

According to various embodiments, the third CTR may be disposed in one area on one surface of the first electrode tab that faces the second sealing area of the lower exterior material, and the fourth CTR may be disposed in one area on one surface of the second electrode tab that faces the second sealing area of the lower exterior material.

According to various embodiments, the first CTR and the third CTR may be disposed to be aligned in another direction perpendicular to the one direction of the exterior material, and the second CTR and the fourth CTR are disposed to be aligned in another direction perpendicular to the one direction of the exterior material.

According to various embodiments, the first CTR may be electrically connected to the first electrode tab and the metal layer included in the upper exterior material based on a first conductive bonding member and a second conductive bonding member, respectively,

According to various embodiments, the second CTR may be electrically connected to the second electrode tab and the metal layer included in the upper exterior material based on the third conductive bonding member and the fourth conductive bonding member, respectively.

According to various embodiments, the third CTR may be electrically connected to the first electrode tab and the metal layer included in the lower exterior material based on a fifth conductive bonding member and a sixth conductive bonding member, respectively.

According to various embodiments, the fourth CTR may be electrically connected to the second electrode tab and the metal layer included in the lower exterior material based on a seventh conductive bonding member and an eighth conductive bonding member, respectively.

According to various embodiments, the first CTR and the second CTR may each have a portion electrically connected to the metal layer included in the exterior material, wherein the portion has a shape including at least one of an acute angle, a right angle, an obtuse angle, and multiple protrusions.

An electronic device (e.g., the electronic device 1600 in FIG. 16) according to the above-described various embodiments may include a housing including a first surface, a second surface, and a third surface surrounding the space between the first surface and the second surface, and a battery (e.g., the battery 100 in FIG. 6) disposed inside the housing.

According to various embodiments, the battery may include an electrode assembly (e.g., the electrode assembly 110a in FIG. 6) including a first electrode tab (e.g., the first electrode tab 117a in FIG. 6) and a second electrode tab (e.g., the second electrode tab 119a in FIG. 6), an exterior material (e.g., the exterior material 130 in FIG. 6) including an internal space configured to accommodate at least a portion of the electrode assembly, and a first critical temperature resistor (CTR) (e.g., the first CTR 140a in FIG. 6) disposed in an area of the first electrode tab and a second CTR (e.g., the second CTR 140b in FIG. 6) disposed in an area of the second electrode tab, wherein the first CTR and the second CTR overlap an edge of the exterior material in one direction in a state in which at least a portion of the electrode assembly is accommodated in the internal space of the exterior material.

According to various embodiments, in the state in which at least a portion of the electrode assembly is accommodated in the internal space of the exterior material, at least one of the first electrode tab and the second electrode tab may be electrically connected to an external component (e.g., the external component 620 in FIG. 6) to provide a first conductive path (e.g., the first conductive path 630 in FIG. 6) between the electrode assembly and the external component.

According to various embodiments, in the state in which at least a portion of the electrode assembly is accommodated in the internal space of the exterior material, the first CTR and the second CTR may be electrically connected to a metal layer included in the exterior material to provide a second conductive path (e.g., the second conductive path 640 in FIG. 6) between the electrode assembly and the exterior material.

According to various embodiments, the first conductive path may be used as a current path between the electrode assembly and the external component when the battery has a temperature lower than a critical temperature predetermined for the first CTR and the second CTR.

According to various embodiments, the second conductive path may be used as a current path between the electrode assembly and the metal layer of the exterior material when the battery has a temperature equal to or higher than the critical temperature predetermined for the first CTR and the second CTR.

According to various embodiments, the exterior material may include an upper exterior material (e.g., the upper exterior material 131 in FIG. 6) and a lower exterior material (e.g., the lower exterior material 133 in FIG. 6) which are sealed to each other to form the exterior material.

According to various embodiments, an edge of the exterior material in one direction may include a first sealing area of the upper exterior material that corresponds to the edge in the one direction and a second sealing area of the lower exterior material that corresponds to the edge in the one direction.

According to various embodiments, the first CTR is disposed in one area on one surface of the first electrode tab that faces the first sealing area of the upper exterior material, and the second CTR may be disposed in one area on one surface of the second electrode tab that faces the first sealing area of the upper exterior material.

According to various embodiments, the first CTR may be electrically connected to the first electrode tab and the metal layer included in the upper exterior material based on a first conductive bonding member and a second conductive bonding member, respectively, the second CTR may be electrically connected to the second electrode tab and the metal layer included in the upper exterior material based on the third conductive bonding member and the fourth conductive bonding member, respectively.

According to various embodiments, the first CTR may be disposed in one area on one surface of the first electrode tab that faces the second sealing area of the lower exterior material, and the second CTR may be disposed in one area on one surface of the second electrode tab that faces the second sealing area of the lower exterior material.

According to various embodiments, the first CTR may be electrically connected to the first electrode tab and the metal layer included in the lower exterior material based on a fifth conductive bonding member and a sixth conductive bonding member, respectively, and the second CTR may be electrically connected to the second electrode tab and the metal layer included in the lower exterior material based on a seventh conductive bonding member and an eighth conductive bonding member, respectively.

According to various embodiments, the battery may further include a third CTR (e.g., the third CTR 140c in FIG. 9) disposed in one area of the first electrode tab and a fourth CTR (e.g., the fourth CTR 140d in FIG. 9) disposed in one area of the second electrode tab.

According to various embodiments, the first CTR may be disposed in one area on one surface of the first electrode tab that faces the first sealing area of the upper exterior material, and the second CTR may be disposed in one area on one surface of the second electrode tab that faces the first sealing area of the upper exterior material.

According to various embodiments, the third CTR may be disposed in one area on one surface of the first electrode tab that faces the second sealing area of the lower exterior material, and the fourth CTR may be disposed in one area on one surface of the second electrode tab that faces the second sealing area of the lower exterior material.

According to various embodiments, the first CTR may be electrically connected to the first electrode tab and the metal layer included in the upper exterior material based on a first conductive bonding member and a second conductive bonding member, respectively,

According to various embodiments, the second CTR may be electrically connected to the second electrode tab and the metal layer included in the upper exterior material based on the third conductive bonding member and the fourth conductive bonding member, respectively.

According to various embodiments, the third CTR may be electrically connected to the first electrode tab and the metal layer included in the lower exterior material based on a fifth conductive bonding member and a sixth conductive bonding member, respectively.

According to various embodiments, the fourth CTR may be electrically connected to the second electrode tab and the metal layer included in the lower exterior material based on a seventh conductive bonding member and an eighth conductive bonding member, respectively.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A battery comprising:
an electrode assembly comprising a first electrode tab and a second electrode tab;
an exterior material comprising an internal space configured to accommodate at least a portion of the electrode assembly; and
a first critical temperature resistor (CTR) disposed in an area of the first electrode tab and a second CTR disposed in an area of the second electrode tab, wherein the first CTR and the second CTR overlap an edge of the exterior material in one direction in a state in which at least a portion of the electrode assembly is accommodated in the internal space of the exterior material,
wherein, in the state in which the at least a portion of the electrode assembly is accommodated in the internal space of the exterior material, at least one of the first electrode tab and the second electrode tab may be electrically connected to an external component to provide a first conductive path between the electrode assembly and the external component, and
wherein in the state in which the at least a portion of the electrode assembly is accommodated in the internal space of the exterior material, the first CTR and the second CTR may be electrically connected to a metal layer comprised in the exterior material to provide a second conductive path between the electrode assembly and the exterior material.

2. The battery of claim 1, wherein the first conductive path is used as a current path between the electrode assembly and the external component in case that the battery has a temperature lower than a critical temperature predetermined for the first CTR and the second CTR, and
wherein the second conductive path is used as a current path between the electrode assembly and the metal layer of the exterior material in case that the battery has a temperature equal to or higher than the critical temperature predetermined for the first CTR and the second CTR.

3. The battery of claim 1, wherein the exterior material comprises an upper exterior material and a lower exterior material, which are sealed to each other to form the exterior material, and
wherein an edge of the exterior material in one direction comprises a first sealing area of the upper exterior material that corresponds to the edge in the one direction and a second sealing area of the lower exterior material that corresponds to the edge in the one direction.

4. The battery of claim 3, wherein the first CTR is disposed in one area on one surface of the first electrode tab that faces the first sealing area of the upper exterior material, and
wherein the second CTR is disposed in one area on one surface of the second electrode tab that faces the first sealing area of the upper exterior material.

5. The battery of claim 3, wherein the first CTR is disposed in one area on one surface of the first electrode tab that faces the second sealing area of the lower exterior material, and
wherein the second CTR is disposed in one area on one surface of the second electrode tab that faces the second sealing area of the lower exterior material.

6. The battery of claim 3, further comprising a third CTR disposed in one area of the first electrode tab and a fourth CTR disposed in one area of the second electrode tab,
wherein the first CTR is disposed in one area on one surface of the first electrode tab that faces the first sealing area of the upper exterior material, and the second CTR is disposed in one area on one surface of the second electrode tab that faces the first sealing area of the upper exterior material, and
wherein the third CTR is disposed in one area on one surface of the first electrode tab that faces the second sealing area of the lower exterior material, and the fourth CTR is disposed in one area on one surface of the second electrode tab that faces the second sealing area of the lower exterior material.

7. The battery of claim 6, wherein the first CTR and the third CTR are disposed to be aligned in another direction perpendicular to the one direction of the exterior material, and the second CTR and the fourth CTR are disposed to be aligned in another direction perpendicular to the one direction of the exterior material.

8. The battery of claim 6, wherein the first CTR is electrically connected to the first electrode tab and the metal layer comprised in the upper exterior material based on a first conductive bonding member and a second conductive bonding member, respectively,
wherein the second CTR is electrically connected to the second electrode tab and the metal layer included in the upper exterior material based on a third conductive bonding member and a fourth conductive bonding member, respectively,
wherein the third CTR is electrically connected to the first electrode tab and the metal layer comprised in the lower exterior material based on a fifth conductive bonding member and a sixth conductive bonding member, respectively, and
wherein the fourth CTR is electrically connected to the second electrode tab and the metal layer included in the lower exterior material based on a seventh conductive bonding member and an eighth conductive bonding member, respectively.

9. The battery of claim 1, wherein the first CTR and the second CTR each comprises a portion electrically connected to the metal layer comprised in the exterior material, the portion having a shape comprising at least one of an acute angle, a right angle, an obtuse angle, and multiple protrusions.

10. An electronic device comprising:
a housing comprising a first surface, a second surface, and a third surface surrounding a space between the first surface and the second surface; and
a battery disposed inside the housing,
wherein the battery comprises:
an electrode assembly comprising a first electrode tab and a second electrode tab;
an exterior material comprising an internal space configured to accommodate at least a portion of the electrode assembly; and
a first critical temperature resistor (CTR) and a second CTR, wherein the first CTR and the second CTR overlap an edge of the exterior material in one direction in a state in which at least a portion of the electrode assembly is accommodated in the internal space of the exterior material,
wherein, in the state in which the at least a portion of the electrode assembly is accommodated in the internal space of the exterior material, at least one of the first electrode tab and the second electrode tab is electrically connected to an external component to provide a first conductive path between the electrode assembly and the external component, and
wherein in the state in which the at least a portion of the electrode assembly is accommodated in the internal space of the exterior material, the first CTR and the second CTR are electrically connected to a metal layer comprised in the exterior material to provide a second conductive path between the electrode assembly and the exterior material.

11. The electronic device of claim 10, wherein the first conductive path is used as a current path between the electrode assembly and the external component in case that the battery has a temperature lower than a critical temperature predetermined for the first CTR and the second CTR, and
wherein the second conductive path is used as a current path between the electrode assembly and the metal layer of the exterior material in case that the battery has a temperature equal to or higher than the critical temperature predetermined for the first CTR and the second CTR.

12. The electronic device of claim 10, wherein the exterior material comprises an upper exterior material and a lower exterior material, which are sealed to each other to form the exterior material, and
wherein an edge of the exterior material in one direction comprises a first sealing area of the upper exterior material that corresponds to the edge in the one direction and a second sealing area of the lower exterior material that corresponds to the edge in the one direction.

13. The electronic device of claim 12, wherein the first CTR is disposed in one area on one surface of the first electrode tab that faces the first sealing area of the upper exterior material, and
wherein the second CTR is disposed in one area on one surface of the second electrode tab that faces the first sealing area of the upper exterior material.

14. The electronic device of claim 12, wherein the first CTR is disposed in one area on one surface of the first electrode tab that faces the second sealing area of the lower exterior material, and
wherein the second CTR is disposed in one area on one surface of the second electrode tab that faces the second sealing area of the lower exterior material.

15. The electronic device of claim 12, wherein the battery further comprises a third CTR disposed in one area of the first electrode tab and a fourth CTR disposed in one area of the second electrode tab,
wherein the first CTR is disposed in one area on one surface of the first electrode tab that faces the first sealing area of the upper exterior material, and the second CTR is disposed in one area on one surface of the second electrode tab that faces the first sealing area of the upper exterior material, and
wherein the third CTR is disposed in one area on one surface of the first electrode tab that faces the second sealing area of the lower exterior material, and the fourth CTR is disposed in one area on one surface of the second electrode tab that faces the second sealing area of the lower exterior material.
